# EUROPÄISCHE PATENTSCHRIFT

(11) **EP 1 722 151 B1**
(45) Veröffentlichungstag und Bekanntmachung des Hinweises auf die Patenterteilung: **20.02.2008**
(21) Anmeldenummer: 06004797.4
(22) Anmeldetag: 09.03.2006
(51) Int. Cl.: F16P 3/14

(54) **Vorrichtung zur Absicherung eines Gefahrenbereiches**
Device for securing a dangerous area
Dispositif pour sécuriser une zone dangereuse

(30) Priorität: 12.05.2005 DE 102005021955
(43) Veröffentlichungstag der Anmeldung: 15.11.2006
(73) Patentinhaber: SICK AG, 79183 Waldkirch (DE)
(72) Erfinder: Wüstefeld, Martin, 79350 Sexau (DE)
(74) Vertreter: Ludewigt, Christoph

(56) Entgegenhaltungen:
- EP-A- 1 197 935
- WO-A-20/05010840
- DE-A1- 19 938 639

## Beschreibung

Die Erfindung betrifft eine Vorrichtung zur Absicherung eines Gefahrenbereiches, insbesondere einer automatisiert arbeitenden Maschine, gemäß dem Oberbegriff des Anspruches 1.

Aus der DE 199 38 639 A1 ist eine Vorrichtung zur Absicherung eines Gefahrenbereiches bekannt, insbesondere des Gefahrenbereichs einer automatisiert arbeitenden Maschine. Die Vorrichtung besitzt erste Mittel zum Erzeugen einer optisch überwachten virtuellen Barriere sowie zweite Mittel zum Erzeugen eines Schaltsignals zum Anhalten der Maschine bei einem Durchbrechen der Barriere. Die Vorrichtung ist dadurch gekennzeichnet, dass die ersten Mittel eine Bildaufnahmeeinheit sowie ein definiertes Ziel aufweisen, dessen Abbild die Bildaufnahmeeinheit aufnimmt. Des Weiteren besitzen die zweiten Mittel eine Vergleichseinheit, die das aufgenommene Abbild mit einer für ein Referenzbild charakteristischen Größe vergleicht. In einer Ausgestaltung weisen die ersten Mittel ferner eine Lichtquelle zur Beleuchtung des definierten Ziels auf.

Diese Vorrichtung weist jedoch wesentliche Nachteile auf. So müssen bei der bekannten Vorrichtung die verschiedenen Komponenten, wie Bildaufnahmeeinheit und definiertes Ziel, unabhängig voneinander angebracht und ausgerichtet werden. Dazu muss sich das unabhängig definierte Ziel im Sichtfeld der Bildaufnahmeeinheit befinden. Aufwendige Verfahren der Bildbearbeitung sind nach der groben Ausrichtung der Bildaufnahmeeinheit notwendig, um das definierte Ziel zu erfassen. Für die Erfassung ist auch ein großes Sichtfeld der Bildaufnahmeeinheit notwendig, um das definierte Ziel während des Ausrichtvorganges in einem weiten Feld zu erfassen. Hierzu muss der Bildsensor als in zwei Dimensionen weit ausgelegte Empfangsfläche vorgesehen werden.

Weiterhin nachteilig sind in der bekannten Vorrichtung zur Erhöhung der Sicherheitsstufe die Bildaufnahmeeinheit und das definierte Ziel für die Absicherung des gleichen Gefahrenbereichs doppelt vorhanden. Dies erhöht die Kosten eines solchen Systems enorm.

Zusätzlich darf bei der bekannten Vorrichtung im Bereich der Bildaufnahmeeinheit und der Beleuchtung kein definiertes Ziel angebracht werden. Hierdurch entstehen in diesen Bereichen Totzonen, die nicht überwacht werden.

Weiter ist aus der WO 2005/010840 A1 ein Verfahren zur Absicherung von Systemen mittels Bildverarbeitungsmitteln bekannt. Mit den Bildverarbeitungsmitteln kann ein von einem überwachten Bereich aufgenommenes Bild ausgewertet werden, so dass Aussagen über Abmessungen des Objektes möglich sind. Zu diesem Zweck wird durch einen Lichtquelle aus einer Beleuchtungsrichtung mindestens eine Richtlinie auf eine überwachende Fläche projiziert, wodurch ein Lichtmuster entsteht. Das Lichtmuster wird mindestens teilweise aus einer von der Beleuchtungsrichtung verschiedenen Richtung durch einen Bildflächensensor erfasst. Das entstandene Kamerasignal wird anschließend einer Bildverarbeitungseinrichtung zugeführt, wenn die Abweichung des Lichtmusters von einer Referenz ermittelt. Durch quantitative Auswertung des Abstands durch die Bildverarbeitungsmittel kann auch eine Höhe des Objektes mindestens annäherungsweise bestimmt werden

Aus der EP 1 197 935 A2 ist eine Vorrichtung und ein Verfahren zur Erfassung eines sich im Überwachungsbereich einer Kamera bewegenden Objektes bekannt. Dabei werden Messgrößen mit Referenzgröße verglichen und eine Objekterkennungsreaktion dann ausgelöst, wenn die Messgröße in vorbestimmter Weise von der Referenzgröße abweicht. Dabei werden sowohl Mess- als auch Referenzgröße aus Unterschieden abgeleitet die zwischen zumindest 2 verschiedenen Bildbereichen existieren.

Der Erfindung liegt die Aufgabe zugrunde, eine verbesserte Vorrichtung zur Absicherung eines Gefahrenbereiches bereitzustellen, insbesondere einer automatisiert arbeitenden Maschine, welche kostengünstiger ist und eine höhere Sicherheitsstufe aufweist.

Die Aufgabe wird erfindungsgemäß nach Anspruch 1 dadurch gelöst, dass zur Absicherung eines Gefahrenbereiches, insbesondere einer automatisiert arbeitenden Maschine eine Vorrichtung verwendet wird, mit einem optischen System zum Überwachen eines Schutzfeldes, bestehend aus wenigstens zwei gegenüberliegenden, zwischen sich das Schutzfeld aufspannenden optischen Einheiten, die jeweils wenigstens eine Bildaufnahmeeinheit aufweisen. Die optischen Einheiten sind mit einer Auswerte- und Schalteinheit zum Anhalten der Maschine bei Verletzung des Schutzfeldes verbunden, wobei die Bildaufnahmeeinheit wenigstens eine Markierung auf der gegenüberliegenden Seite des Schutzfeldes erfasst und die Auswerte- und Schalteinheit eine Vergleichseinheit aufweist, die das aufgenommene Bild mit einem Referenzbild vergleicht. Jede optische Einheit weist wenigstens eine Beleuchtungsvorrichtung zum Beleuchten der gegenüberliegenden Markierung auf. Die Bildaufnahmeeinheit, die Markierung für die gegenüberliegende optische Einheit und die Beleuchtungsvorrichtung sind in einem gemeinsamen Gehäuse untergebracht und zu dem Gehäuse ausgerichtet. Die Beleuchtungsvorrichtung der ersten optischen Einheit ist durch die Bildaufnahmeeinheit der zweiten optischen Einheit einsehbar angeordnet. Umgekehrt ist die Beleuchtungsvorrichtung der zweiten optischen Einheit durch die Bildaufnahmeeinheit der ersten optischen Einheit einsehbar angeordnet.

Auf diese Weise kann die Beleuchtungsvorrichtung der ersten optischen Einheit auf die Bildaufnahmeeinheit der zweiten optischen Einheit wirken und umgekehrt. Dadurch lässt sich die Bildaufnahmeeinheit gezielt über die gegenüberliegende optische Einheit beaufschlagen. So kann die Bildaufnahmeeinheit über die Beleuchtungsvorrichtung gezielt stimuliert werden.

Die Bildaufnahmeeinheit der ersten bzw. zweiten optischen Einheit ist durch die Beleuchtungsvorrichtung der zweiten bzw. ersten optischen Einheit über und/oder unter eine bestimmte Aufnahmeempfindlichkeit der Bildaufnahmeeinheit beaufschlagt werden. So können z. B. die Betriebsparameter und die Funktion der Bildaufnahmeeinheit überprüft werden.

Durch die Integration der Bildaufnahmeeinheit, der Markierung sowie der Beleuchtungsvorrichtung in einem Gehäuse und eine Ausrichtung dieser Komponenten innerhalb des Gehäuses, müssen diese Komponenten nicht unabhängig bei einem Installationsvorgang ausgerichtet werden. Es ist für die Beleuchtungsvorrichtung, die Bildaufnahmeeinheit und die Markierung nur ein Gehäuse anzubringen. Dies erleichtert den erforderlichen Installationsaufwand erheblich.

Es können mehrere Bildaufnahmeeinheiten und mehrere Markierungen sowie mehrere Beleuchtungsvorrichtungen in einem Gehäuse untergebracht sein. Dadurch können mit einer Vorrichtung, Absicherungen der Gefahrenbereiche in mehreren Richtungen erfolgen. So können z. B. zwei Bildaufnahmeeinheiten mit einem um 90° verschwenkten Blickfeld angeordnet sein. Durch diese zwei Bildaufnahmeeinheiten kann der Gefahrenbereich in zwei Richtungen überwacht werden. Die zugehörigen Beleuchtungsvorrichtungen sowie die Markierungen sind ebenfalls um 90° verschwenkt angeordnet.

Erfindungsgemäß ist die zweite optische Einheit identisch zur ersten aufgebaut und hat dadurch die gleichen räumlichen Gehäuseabmessungen. Durch diese identischen Abmessungen kann die optische Einheit einfach der ersten optischen Einheit gegenüber, längsseits umgekehrt und auf diese zugewandt montiert werden. Die Positionierung der optischen Einheiten zueinander muss nicht exakt erfolgen. Eine grobe Ausrichtung der optischen Einheit reicht aus. Es muss lediglich sichergestellt sein, dass die Markierung der ersten bzw. zweiten optischen Einheit durch die Bildaufnahmeeinheit der zweiten bzw. ersten optischen Einheit einsehbar angeordnet ist. Die Bildaufnahmeeinheit ist durch die Anordnung der optischen Einheit vorteilhaft in der Lage, ohne zusätzliche Ausrichtung die gegenüberliegende Markierung zu erfassen und die aufgenommenen Bildinformationen weiterzuleiten oder vorab zu verarbeiten. Veränderungen der Markierung werden dabei von der Bildaufnahmeeinheit erfasst und können nachfolgend ausgewertet werden.

Vorteilhaft sind Mittel zum Einlernen der Markierung in dem optischen System oder der Auswerte- und Schalteinheit vorhanden. Mit den Mitteln zum Einlernen der Markierung kann das System sehr einfach in Betrieb genommen werden. Durch das Einlernen der Markierung muss diese nicht exakt ausgerichtet werden. Die Markierung kann nach dem groben Ausrichten mit Hilfe der Mittel zum Einlernen gelernt werden. Diese Mittel sind beispielsweise Taster, Schlüsselschalter und/oder Eingabeelemente mit Anzeigen zum Beobachten der Eingabe und Beobachten des Ergebnisses der Eingabe.

Vorteilhaft sind Mittel zur Veränderung mindestens eines Betriebsparameters der Beleuchtungsvorrichtung vorhanden. Mit dieser Veränderung der Beleuchtungsvorrichtung kann zum einen vorteilhaft die Markierung verändert beleuchtet werden, oder auch die Bildaufnahmeeinheit direkt verändert beleuchtet werden.

Es ist zum Beispiel möglich, die Mittel zur Veränderung des Betriebsparameters der Beleuchtungsvorrichtung zyklisch zu aktivieren. Dadurch kann die Bildaufnahmeeinheit zyklisch einem Test auf Funktion unterzogen werden. Dieser Selbsttest ist eine Maßnahme, um eine Sicherheitsstufe des Gerätes zu erhöhen.

Vorteilhaft ist der Betriebsparameter der Beleuchtungsvorrichtung eine Lichtstärke und/oder eine Lichtpulsdauer und/oder eine Lichtimpulspause und/oder eine Lichtwellenlänge. Durch die Veränderung dieser Betriebsparameter der Beleuchtungsvorrichtung kann die Ausleuchtung der Markierung gegenüber Fremdlichteinflüssen differenziert werden. Dadurch können störende Impulsfremdlichteinflüsse vorteilhaft unterdrückt werden.

Vorteilhaft ist die Auswerte- und Schalteinheit in einem weiteren Gehäuse untergebracht. Dadurch sind die optischen Einheiten und die Auswerte- und Schalteinheit getrennt untergebracht. Dies hat den Vorteil, dass die optischen Einheiten klein und handlich ausgeführt werden können und so auch bei geringen Platzverhältnissen flexibel eingesetzt und montiert werden können. Die Auswerte- und Schalteinheit kann an einer anderen Position zu den optischen Einheiten angebracht werden. Störende elektromagnetische Einflüsse können durch die räumliche Trennung zusätzlich vermieden werden. An die gemeinsame Auswerte- und Schalteinheit können auch weitere zusätzliche optische Einheiten angeschlossen werden. Die Flexibilität der Vorrichtung wird dadurch enorm erhöht.

Mit der Auswerte- und Schalteinheit kann die Beleuchtungsvorrichtung und die zugehörige Bildaufnahmeeinheit angesteuert werden. Dazu sind die optischen Einheiten mit der Auswerte- und Schalteinheit über Informationskanäle verbunden. Über diese Informationskanäle können Auswerte- und Ansteuerinformationen zu den Beleuchtungsvorrichtungen und/oder von und zu den Bildaufnahmeeinheiten gelangen.

Die Informationskanäle können vorteilhaft als Informationsleitungen, als Bussystem oder als drahtloses Übertragungssystem ausgebildet sein. Für die Vorrichtung an kleineren Maschinen sind Informationsleitungen hervorragend geeignet. Für umfangreichere Vorrichtungen oder verteilte Systeme bieten sich Bussysteme und drahtlose Übertragungssysteme an.

In einer zweckmäßigen Weiterbildung ist die Markierung über eine ganze Seite des Gehäuses ausgedehnt. Auf diese Weise bedeckt die Markierung die gesamte Oberfläche der Seite des Gehäuses. Dadurch kann das erzeugte Schutzfeld ohne Totzone über die ganze Seite des Gehäuses realisiert werden. Insbesondere wenn die optische Einheit bei reduzierten Platzverhältnissen eingesetzt werden soll, ist diese Ausführung besonders wirkungsvoll.

Weitere Markierungen können vorteilhaft als Module an das Gehäuse angebracht werden. Dadurch kann die Vorrichtung an verschiedene Schutzfeldausdehnungen angepasst werden, ohne dass die gesamte Vorrichtung ausgetauscht werden muss.

Das Gehäuse ist zur Anpassung der Markierung zusätzlich ablängbar ausgebildet. Dadurch kann das Schutzfeld entlang des Gehäuses verkleinert werden, ohne dass die gesamte Vorrichtung ausgetauscht werden muss.

Die Markierung weist mindestens zwei verschiedene Bereiche, insbesondere farblich hell und dunkel ausgeprägte Felder auf. Die Öffnungen für die Bildaufnahmeeinheit und die Beleuchtungsvorrichtung sind vorteilhaft innerhalb von farblich dunklen Feldern der Markierung angebracht. Durch die Öffnungen in der Markierung sind die Bildaufnahmeeinheit und die Beleuchtungsvorrichtungseinheit innerhalb der Markierung integriert. Dadurch kann die Markierung auf der ganzen Gehäuseseite optisch wirksam eingesetzt und Totzonen vermieden werden. Insbesondere wenn die optische Einheit bei reduzierten Platzverhältnissen eingesetzt werden soll, ist diese Ausführung besonders vorteilhaft.

Die Bildaufnahmeeinheiten verschiedener optischer Einheiten weisen gleiche Abmessungen einer Bildaufnahmefläche für verschieden große Abbildungen und verschieden positionierte Abbildungen der Markierung auf der Bildaufnahmefläche auf. Die Bildaufnahmeeinheit braucht für verschiedene Ausdehnungen des Schutzfeldes nicht verändert werden. Die Vorrichtung lässt sich mit derselben Bildaufnahmeeinheit mit verschieden flächig ausgedehnten Markierungen ausprägen. Damit sinkt die Variantenvielfalt und die damit verbundenen Herstellkosten der Vorrichtung enorm.

Gemäß einer besonderen Ausführungsform weist die optische Einheit ein Interferenzfilter auf. Dadurch können vorteilhaft zusätzlich Störlichteinflüsse unterdrückt werden. Zusätzlich können Abbildungsunschärfen aufgrund mehrfarbiger Abbildungen reduziert werden.

Die optische Einheit weist in Weiterbildung der Erfindung eine Empfangsoptik auf. Dadurch kann ein Bild auf die Bildaufnahmeeinheit abgebildet werden. Durch die Empfangsoptik lässt sich ein länglich schmales Bild der Markierung auf die Abmessungen der Bildaufnahmeeinheit anpassen.

Vorteilhaft weist die optische Einheit eine Blende auf. Die Blende ist im Brennpunkt der Empfangsoptik angeordnet. Durch die Blende wird die Tiefenschärfe verbessert und indirekte Strahlung außerhalb des beabsichtigten Empfangswinkels unterdrückt.

Die Blende ist vorteilhaft aus metallischem Material ausgebildet. Dadurch lässt sich eine höhere elektromagnetische Verträglichkeit im Bereich der Empfangsoptik realisieren.

Die Bildaufnahmeeinheit ist mit einem Abstand von 0,5 - 2 mm hinter der Blende angeordnet. Dadurch wird die optische Einheit sehr kompakt und platzsparend realisiert. Insbesondere wenn die optische Einheit bei reduzierten Platzverhältnissen eingesetzt werden soll, ist diese Ausführung besonders vorteilhaft.

Im Folgenden wird die Erfindung an Hand eines Ausführungsbeispiels unter Bezugnahme auf die Zeichnung im Einzelnen erläutert.

In der Zeichnung zeigt:
Figur 1;
   eine schematische Darstellung einer erfindungsgemäßen Vorrichtung;
Figur 2
   eine schematische Darstellung einer Markierung.

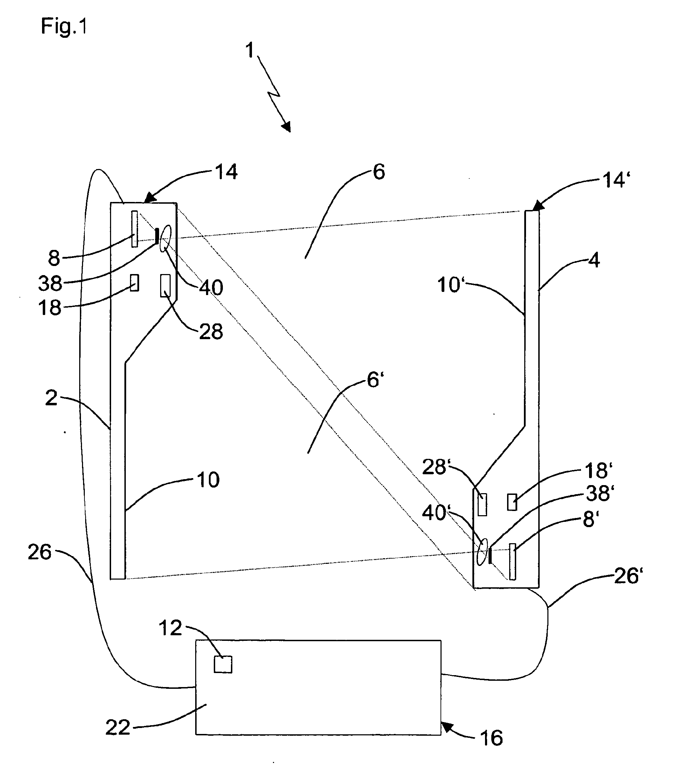

Figur 1 zeigt eine erfindungsgemäße Vorrichtung 1 zur Absicherung eines Gefahrenbereichs einer automatisiert arbeitenden Maschine in einer Seitenansicht. Die Vorrichtung 1 besteht in der dargestellten Ausführungsform aus einer ersten optischen Einheit 2 und einer zweiten optischen Einheit 4. Die optischen Einheiten 2 und 4 sind jeweils in einem Gehäuse 14 und 14' angeordnet. Die zwei optischen Einheiten 2 und 4 sind mit einer Auswerte- und Schalteinheit 22 über Informationskanäle 26 und 26' verbunden. Die optischen Einheiten 2 und 4 beinhalten jeweils eine Bildaufnahmeeinheit 8, 8' eine Markierung 10, 10', eine Beleuchtungsvorrichtung 28, 28', Mittel 18, 18' zur Veränderung eines Betriebsparameters der Beleuchtungsvorrichtung und eine Empfangsoptik 40, 40'. Zusätzlich weisen die optischen Einheiten 2 und 4 jeweils eine Blende 38, 38' auf. Diese optischen Komponenten sind innerhalb und zu dem Gehäuse 14 bzw. 14' ausgerichtet. Bei einem Installationsvorgang der Vorrichtung 1 brauchen nur noch die optischen Einheiten 2 und 4 gegeneinander ausgerichtet werden.

Die zwei optischen Einheiten 2 und 4 sind identisch ausgebildet und sich gegenseitig zugewandt, längsseits umgekehrt und beabstandet, angeordnet. Mit den zwei identischen optischen Einheiten 2 und 4 lassen sich zwei Schutzfelder 6 und 6' erzeugen. Die Schutzfelder 6 und 6' sind durch die Anordnung der Bildaufnahmeeinheit 8 bzw. 8' zu der Markierung 10' bzw. 10 dreiecksförmig ausgebildet. Die zwei dreiecksförmigen Schutzfelder 6 und 6' bilden durch die geometrische Anordnung der beiden optischen Einheiten zueinander ein nahezu rechteckiges Schutzfeld.

Die beiden optischen Einheiten 2 und 4 sind dabei gleich im konstruktiven Aufbau. Dies erleichtert einen Einsatz der Vorrichtung 1 sowie eine Lagerhaltung wesentlich. Das Schutzfeld 6, 6' entsteht zwischen den beiden optischen Einheiten 2 und 4 durch eine Überwachung der Markierung 10' bzw. 10 durch die gegenüberliegende Bildaufnahmeeinheiten 8 bzw. 8'. Abhängig von einer Unterbrechung des Schutzfeldes 6, 6' kann ein Steuersignal, z. B. zur Abschaltung einer gefahrbringenden Bewegung, abgegeben werden.

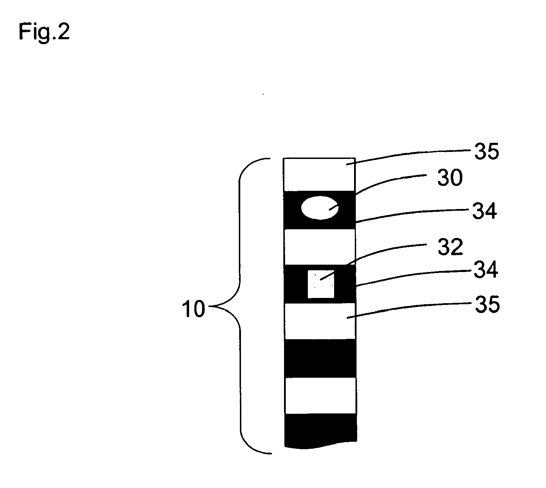

Die Markierung 10 auf der ersten optischen Einheit 2 ist für die Bildaufnahmeeinheit 8' der zweiten optischen Einheit 4 einsehbar angeordnet, und umgekehrt ist die Markierung 10' der zweiten optischen Einheit 4 für die Bildaufnahmeeinheit 8 in der ersten optischen Einheit 2 einsehbar angeordnet. Bei der Markierung 10, 10' handelt es sich um ein kontrastreiches einfaches Muster, das von der Bildaufnahmeeinheit 8', 8 einfach erkennbar ist. So kann die Markierung 10, 10' aus abwechselnd hellen Feldern 35 und dunklen Feldern 34 wie in Figur 2 dargestellt, bestehen. Die Markierung 10, 10' der beiden optischen Einheiten 2 und 4 lässt sich durch die jeweils gegenüberliegende Beleuchtungsvorrichtung 28', 28 gezielt ausleuchten. Dadurch ist es möglich, die Markierung 10, 10' entsprechend dem Umgebungslicht effizient zu beleuchten, so dass die jeweilige Bildaufnahmeeinheit 8', 8 die jeweilige Markierung 10, 10' optimal erfassen kann.

Die Bildaufnahmeeinheiten 8 und 8' der beiden optischen Einheiten liegen innerhalb der Vorrichtung diagonal gegenüber. Die Beleuchtungsvorrichtung 28, 28' ist nahe zu der Bildaufnahmeeinheit 8, 8' angebracht. Die Beleuchtungsvorrichtung 28 der ersten optischen Einheit ist einsehbar durch die Bildaufnahmeeinheit 8' der zweiten optischen Einheit 4 angeordnet. Umgekehrt ist die Beleuchtungsvorrichtung 28' der zweiten optischen Einheit 4 durch die Bildaufnahmeeinheit 8 der ersten optischen Einheit 2 einsehbar angeordnet. Dadurch ist es möglich, die Bildaufnahmeeinheit 8, 8' durch die gegenüberliegende Beleuchtungsvorrichtung 28', 28 zu beaufschlagen und somit die Bildaufnahmeeinheit 8, 8' durch direkte Beleuchtung zu stimulieren und zu testen.

Die Bildaufnahmeeinheit 8, 8' kann durch die Beleuchtungsvorrichtung 28', 28 zum Beispiel in kurzen Impulsen hintereinander überblendet werden. So wird eine maximale Ausleuchtung der Bildaufnahmeeinheit 8, 8' bewerkstelligt und zusätzlich durch die kurzen Impulse der Beleuchtungsvorrichtung 28', 28 eine Kennung an die Bildaufnahmeeinheit übertragen. Durch diese Ausleuchtung und die Kenntnis einer Beleuchtungsstärke innerhalb der Vorrichtung 1 und des Beleuchtungszeitpunktes kann die Bildaufnahmeeinheit 8, 8' auf eine einwandfreie Funktion hin getestet werden. Dieser Test kann zyklisch während des Betriebes durchgeführt werden.

Zur optimalen Ausleuchtung weist die Beleuchtungsvorrichtung 28, 28' geeignete Mittel zur Veränderung 18, 18' mindestens eines Betriebsparameters der Beleuchtungsvorrichtung auf. Die Mittel zur Veränderung 18, 18' können durch einen Bediener eingestellt und vorgegeben werden. So können die Betriebsparameter der Beleuchtungsvorrichtung 28, 28' durch das Mittel 18, 18' zyklisch aktiviert werden. Der Betriebsparameter kann dabei eine Lichtstärke darstellen. Mit der Lichtstärke kann zum Beispiel die Ausleuchtung der Markierung 10', 10 im Vergleich zum Umgebungslicht oder zu anderen Fremdlichtquellen verändert werden. Weiterhin kann eine Lichtimpulsdauer oder eine Lichtimpulspausenzeit verändert werden. Dies ist insbesondere zur Unterdrückung von Störlichteinflüssen von Vorteil. In einer weiteren zweckmäßigen Ausführungsform kann eine Lichtwellenlänge verändert werden. Dies ist weiterhin eine geeignete Maßnahme, um Störlichteinflüsse zu vermeiden.

Während der Inbetriebnahme kann die jeweilige Markierung 10, 10' durch die gegenüberliegende Bildaufnahmeeinheit 8', 8 eingelernt werden. Die Vorrichtung 1 weist hierzu geeignete Mittel zum Einlernen der Markierung 10, 10' auf. Die Markierung 10, 10' kann zum Beispiel durch Betätigen eines einfachen Tasters oder durch Anwahl eines Menüpunktes einer Inbetriebnahmesoftware eingelernt werden. Während des Betriebes der Vorrichtung kann die eingelernte Markierung 10, 10' mittels einer Vergleichseinheit 12 mit einem aktuellen Bild der Markierung 10, 10' verglichen und dann abhängig das Steuersignal von der Auswerte- und Schalteinheit 22 abgegeben werden.

Die Markierung 10 bzw. 10' ist vorteilhaft über eine ganze Seite der optischen Einheit 2 bzw. 4 ausgedehnt. So kann mit Hilfe der optischen Einheiten 2 und 4 ein Schutzfeld 6 und 6' ohne Totzonen an den Enden realisiert werden. Gerade bei engen Platzverhältnissen, wie zum Beispiel bei Materialzuführungsöffnungen von Halbleiterplattenherstellungsmaschinen, ist eine totzonenfreie Ausführung von Vorteil. Wie in Figur 2 erkennbar, ist beispielhaft für Markierung 10 eine Bildaufnahmeeinheitsöffnung 30 und eine Beleuchtungsvorrichtungsöffnung 32 dabei innerhalb der dunklen Felder 34 der Markierung 10 untergebracht. Auf diese Weise ist die Bildaufnahmeeinheit und die Beleuchtungsvorrichtung mit den zugehörigen Öffnungen 30 und 32 optimal innerhalb der Markierung 10 integriert.

Die Markierung kann auch über zusätzliche Module erweitert werden, in dem in Verlängerung des Gehäuses 14, 14' weitere Module, die mit dem Muster der Markierung bedruckt sind, angebracht werden. Die zusätzlichen Module sind in dem Sichtbereich der Bildaufnahmeeinheit angeordnet. Diese muss für die zusätzliche Markierung nicht mehr angepasst werden. Auch die Beleuchtungsvorrichtung muss für die zusätzlich angebrachte Markierung nicht mehr angepasst werden. Das Gehäuse der optischen Einheiten kann in dem Bereich der angebrachten Markierung auch abgelängt werden. So kann die optisch überwachte, virtuelle Barriere nachträglich auch verkleinert werden.

Zur Verbindung der beiden optischen Einheiten 2 und 4 ist die Auswerte- und Schalteinheit 22 vorgesehen. Die Auswerte- und Schalteinheit 22 ist vorteilhaft in einem eigenen Gehäuse 16 untergebracht. Das hat den großen Vorteil, dass die optischen Einheiten 2 und 4 klein und preiswert hergestellt werden können. Die Auswerte- und Schalteinheit 22 für die optischen Einheiten 2 und 4 ist dabei vorteilhaft nur einmalig in einem eigenen Gehäuse 16 vorhanden. Die Auswerte- und Schalteinheit 22 ist dabei vorzugsweise als sichere Einheit, z. B. zweikanalig zur Erhöhung einer Sicherheitsstufe der Vorrichtung 1, ausgeführt. Durch eine gemeinsame Auswertung und Ansteuerung der optischen Einheiten 2 und 4 kann die Auswerte- und Schalteinheit 22 preiswert hergestellt werden. Durch Zusammenfassung der Informationen in der Auswerte- und Schalteinheit 22 entfallen unnötige Verbindungsleitungen oder Synchronisationsvorrichtungen. Die Auswerte- und Schalteinheit 22 ist lediglich über Informationskanäle 26 und 26' mit den beiden optischen Einheiten 2 und 4 verbunden. Die Informationskanäle 26 und 26' können als Informationsleitungen, als Bussystem oder als drahtloses Übertragungssystem ausgebildet sein. Informationsleitungen können in sehr preisgünstigen Varianten in der erfindungsgemäßen Vorrichtung 1 vorgesehen werden. Ein Bussystem eignet sich bei erweiterter Funktion wie zum Beispiel bei zusätzlichen Diagnosefunktionen, besonders. Die drahtlose Übertragung mittels Funkübertragung oder optischer Übertragungskanäle eignet sich besonders für räumlich verteilte Systeme. So entfällt die Leitungsführung über größere Distanzen.

Mit Hilfe der Auswerte- und Schalteinheit 22 lassen sich die Beleuchtungsvorrichtungen 28 und 28' und die Bildaufnahmeeinheiten 8 und 8' der beiden optischen Einheiten 2 und 4 gemeinsam steuern und auswerten. Von Vorteil ist hierbei, dass die Veränderung der Betriebsparameter der Beleuchtungsvorrichtung 28 der ersten optischen Einheit 2 und die Bildaufnahmeeinheit 8' der zweiten optischen Einheit 4 von der Auswerte- und Schalteinheit 22 vorgenommen werden kann. So kann die Auswertung der Bildaufnahmeeinheit 8' in der zweiten optischen Einheit 4 auf Basis der Ansteuerung der Beleuchtungsvorrichtung 28 in der ersten optischen Einheit 2 vorgenommen werden. Es besteht somit eine direkte Synchronisierung und Abstimmung zwischen der Beleuchtungsvorrichtung 28 in der ersten optischen Einheit 2 und der Bildaufnahmeeinheit 8' in der zweiten optischen Einheit 4. Es ist somit keine optische Synchronisation notwendig.

In einer zweckmäßigen Weiterbildung der Erfindung weisen die optischen Einheiten vor den Bildaufnahmeeinheiten jeweils ein Interferenzfilter auf. Durch das Interferenzfilter wird der Einfluss von Fremdlicht reduziert. Zusätzlich wird die Abbildungsunschärfe bei mehrfarbigen Abbildungen reduziert. Dadurch kann die Empfangsoptik preiswerter gestaltet werden.

Die Empfangsoptik 40 bzw. 40' dient zur scharfen Abbildung der Markierung 10' bzw. 10 auf die Bildaufnahmeeinheit 8 bzw. 8'. Mit Hilfe der Empfangsoptik 40 bzw. 40' wird auch ein Bereich um die Markierung 10' bzw. 10 erfasst. Dadurch ist es möglich, dass die Markierung 10' bzw. 10 in verschiedenen Längen und bei verschiedenen Ausrichtungen von der Bildaufnahmeeinheit 8 bzw. 8' vollständig erfasst wird.

Weiterhin weisen die optischen Einheiten 2 und 4 im Brennpunkt der Empfangsoptik 40 bzw. 40' eine Blende 38 bzw. 38' auf. Die Bildaufnahmeeinheit 8 bzw. 8' befindet sich etwa 0,5 mm bis 2 mm hinter der Blende 38 bzw 38'. Durch die Blende 38, 38' wird eine Tiefenschärfe verbessert und indirekte Strahlung außerhalb eines beabsichtigten Empfangswinkels unterdrückt. Wird die Blende 38, 38' vorteilhaft aus Metall ausgeführt, führt diese zu einer Abschirmung unerwünschter elektromagnetischer Strahlung über die Empfangsoptik 40, 40' auf die Bildaufnahmeeinheit 8, 8'.

## Patentansprüche

1. Vorrichtung, zur Absicherung eines Gefahrenbereiches, insbesondere einer automatisiert arbeitenden Maschine, mit einem optischen System zum Überwachen eines Schutzfeldes (6, 6'), bestehend aus wenigstens zwei gegenüberliegenden, zwischen sich das Schutzfeld (6, 6') aufspannenden optischen Einheiten (2, 4), die jeweils wenigstens eine Bildaufnahmeeinheit (8, 8') aufweisen, die mit einer Auswerte- und Schalteinheit (22) verbunden sind, zum Anhalten der Maschine bei Verletzung des Schutzfeldes (6, 6'), wobei die Bildaufnahmeeinheit (8, 8') wenigstens eine Markierung (10', 10) auf der gegenüberliegenden Seite des Schutzfeldes (6, 6') erfasst und die Auswerte- und Schalteinheit (22) eine Vergleichseinheit (12) aufweist, die das aufgenommene Bild mit einem Referenzbild vergleicht, wobei jede optische Einheit (2, 4) wenigstens eine Beleuchtungsvorrichtung (28, 28') zum Beleuchten der gegenüberliegenden Markierung (10', 10) aufweist, und wobei die erste und die zweite optische Einheit (2, 4) identisch ausgebildet sind und sich gegenseitig, längsseits umgekehrt, zugewandt und beabstandet, angeordnet sind **dadurch gekennzeichnet, dass** die Bildaufnahmeeinheit (8, 8') die Markierung (10', 10) der jeweils gegenüberliegenden optischen Einheit (4, 2) und die Beleuchtungsvorrichtung (28, 28') in einem gemeinsamen Gehäuse (14, 14') untergebracht und zu dem Gehäuse (14, 14') ausgerichtet sind, wobei die Bildaufnahmeeinheit (8, 8') der ersten bzw. zweiten optischen Einheit (2, 4) durch die Beleuchtungsvorrichtung (28', 28) der zweiten bzw. ersten optischen Einheit (4, 2) über und/oder unter eine Aufnahmeempfindlichkeit der Bildaufnahmeeinheit (8, 8') beaufschlagbar ist, und dass die Beleuchtungsvorrichtung (28, 28') der ersten bzw. zweiten optischen Einheit (2, 4) durch die Bildaufnahmeeinheit (8', 8) der zweiten bzw. ersten optischen Einheit (4, 2) einsehbar angeordnet ist.

2. Vorrichtung nach einem der vorhergehenden Ansprüche, **dadurch gekennzeichnet, dass** Mittel zum Einlernen der Markierung (10, 10') vorhanden sind.

3. Vorrichtung nach einem der vorhergehenden Ansprüche, **dadurch gekennzeichnet, dass** Mittel (18, 18') zur Veränderung mindestens eines Betriebsparameters der Beleuchtungsvorrichtung (28, 28') vorhanden sind.

4. Vorrichtung nach Anspruch 3, **dadurch gekennzeichnet, dass** das Mittel (18, 18') zur Veränderung des Betriebsparameters der Beleuchtungsvorrichtung (28, 28') zyklisch aktivierbar sind.

5. Vorrichtung nach Anspruch 3 oder 4, **dadurch gekennzeichnet, dass** der Betriebsparameter der Beleuchtungsvorrichtung (28, 28') eine Lichtstärke und/oder eine Lichtimpulsdauer und/oder eine Lichtimpulspause und/oder eine Lichtwellenlänge ist.

6. Vorrichtung nach einem der vorhergehenden Ansprüche, **dadurch gekennzeichnet, dass** die Auswerte- und Schalteinheit (22) in einem weiteren Gehäuse (16) untergebracht ist.

7. Vorrichtung nach einem der vorhergehenden Ansprüche, **dadurch gekennzeichnet, dass** die optischen Einheiten (2, 4) mit der Auswerte- und Schalteinheit (22) über Informationskanäle (26, 26') verbunden sind.

8. Vorrichtung nach Anspruch 7 **dadurch gekennzeichnet, dass** die Informationskanäle (26, 26') als Informationsleitungen, als Bussystem oder als drahtloses Übertragungssystem ausgebildet sind.

9. Vorrichtung nach einem der vorhergehenden Ansprüche, **dadurch gekennzeichnet, dass** die Markierung (10, 10') über eine ganze Seite des Gehäuses (14, 14') ausgedehnt ist.

10. Vorrichtung nach einem der vorhergehenden Ansprüche, **dadurch gekennzeichnet, dass** weitere Markierungen (10, 10') als Module an das Gehäuse (14, 14') angebracht werden können.

11. Vorrichtung nach einem der vorhergehenden Ansprüche, **dadurch gekennzeichnet, dass** das Gehäuse (14, 14') zur Anpassung der Markierung (10, 10') ablängbar ausgebildet ist.

12. Vorrichtung nach einem der vorhergehenden Ansprüche, **dadurch gekennzeichnet, dass** die Markierung (10, 10') mindestens zwei verschiedene Bereiche, insbesondere farblich hell und dunkel ausgeprägte Felder (35, 34), aufweist.

13. Vorrichtung nach Anspruch 12, **dadurch gekennzeichnet, dass** Öffnungen (30, 32) für die Bildaufnahmeeinheit (8, 8') und die Beleuchtungsvorrichtung (28, 28') innerhalb von farblich dunklen Feldern (34) der Markierung (10, 10') angebracht sind.

14. Vorrichtung nach einem der vorhergehenden Ansprüche, **dadurch gekennzeichnet, dass** die Bildaufnahmeeinheiten (8, 8') verschiedener optischer Einheiten (2, 4) gleiche Abmessungen einer Bildaufnahmefläche für verschieden große Abbildungen und verschieden positionierte Abbildungen der Markierung (10, 10') auf der Bildaufnahmefläche aufweist.

15. Vorrichtung nach einem der vorhergehenden Ansprüche, **dadurch gekennzeichnet, dass** die optischen Einheiten (2, 4) jeweils ein Interferenzfilter aufweisen.

16. Vorrichtung nach einem der vorhergehenden Ansprüche, **dadurch gekennzeichnet, dass** die optischen Einheiten (2, 4) jeweils eine Empfangsoptik (40, 40') zur Abbildung einer länglich, schmalen Markierung (10', 10) aufweisen.

17. Vorrichtung nach einem der vorhergehenden Ansprüche, **dadurch gekennzeichnet, dass** die optischen Einheiten (2, 4) zur Verbesserung einer Tiefenschärfe jeweils eine Blende (38, 38') aufweisen.

18. Vorrichtung nach Anspruch 17, **dadurch gekennzeichnet, dass** die Blende (38, 38') zur Erhöhung einer elektromagnetischen Verträglichkeit der optischen Einheiten (2, 4) aus metallischem Material ausgebildet ist.

19. Vorrichtung nach Anspruch 1 und 18, **dadurch gekennzeichnet, dass** die Bildaufnahmeeinheit (8, 8') mit einem Abstand von 0,5 - 2 mm hinter der Blende (38, 38') angeordnet ist.

## Claims

1. Apparatus for monitoring a dangerous zone, especially an automatically working machine, with an optical system for monitoring a protected field (6, 6') comprising at least two opposing optical units (2, 4) arranged so that the protected field is between them, each optical unit including a image-capturing unit (8, 8'), a processing and switching unit (22) operatively connected with the image-capturing unit (8, 8') for stopping the machine upon violation of the protected field (6, 6'), whereby the optical unit (8, 8') being arranged so that an at least one marking (10', 10) on an opposite side of the protected field (6, 6') can be viewed by the image-capturing unit, the processing and switching unit (22) including a comparison unit (12) for comparing an image taken by the image-capturing unit with a reference image, whereby each optical unit (2, 4) further including at least one lighting unit for illuminating the oppositely positioned marking (10', 10) and whereby the first and second optical units are identical and are arranged longitudinally reversed, opposite and spaced apart from each other **characterized in that** the image-capturing unit (8, 8'), the marking (10', 10) of the opposed lying optical unit (2, 4) and the lighting unit (28, 28,') being arranged in a common housing (14, 14') and are mutually aligned to the common housing (14, 14'), whereby the image-capturing unit (8, 8') of the first and second optical unit (2, 4) can be subjected to light from the second and first lighting units (28', 28), respectively, above and/or below an image-capturing threshold illumination of the respective image-capturing unit (4, 2), and **in that** the lighting unit (28, 28') of the first and second optical unit (2, 4) is arranged so that they are within the view of the second and first image-capturing unit (4,2), respectively.

2. Apparatus according to claim 1 **characterized by** means for teaching the marking (10, 10').

3. Apparatus according to any of the preceding claims **characterized by** means for changing at least one operating parameter of the lighting unit (28, 28').

4. Apparatus according claim 3 **characterized in that** the means for changing the at least one operating parameter is adapted to be cyclically activated.

5. Apparatus according to claim 3 or 4 **characterized in that** the at least one operating parameter of the lighting unit (28, 28') comprises at least one of a light intensity, a light impulse duration, a light impulse interruption duration, and a light wave length.

6. Apparatus according to any of the preceding claims **characterized in that** the processing and switching unit (22) is arranged in an additional housing (16).

7. Apparatus according to any of the preceding claims **characterized in that** information channels (26, 26') operatively connecting the optical units (2, 4) with the processing and switching unit (22).

8. Apparatus according to claim 7 wherein the information channel (26, 26') comprises one of an information conductor, a bus system and a wireless transmission system.

9. Apparatus according to any of the preceding claims **characterized in that** the marking (10, 10') is applied to and extend over an entire side of the housing (14, 14').

10. Apparatus according to any of the preceding claims **characterized in that** the marking (10, 10') comprises modules attached to the housing (14, 14').

11. Apparatus according to any of the preceding claims **characterized in that** the housing (14, 14') is longitudinally adjustable for adapting the housing to the marking (10, 10').

12. Apparatus according to any of the preceding claims **characterized in that** the marking (10, 10') comprises at least two different areas, especially light and dark coloured areas (35, 34).

13. Apparatus according to claim 12 wherein the image-capturing unit (8, 8') and the lighting unit (28, 28') each contain openings (30, 32) arranged within the dark areas (34) of the marking (10, 10').

14. Apparatus according to any of the preceding claims **characterized in that** the image-capturing units (8, 8') of different optical units (2, 4) include image-capturing surfaces of like dimensions for capturing images of the marking (10, 10') having at least one of different sizes, different image positions and different image orientations.

15. Apparatus according to any of the preceding claims **characterized in that** at least one of the optical units (2, 4) includes an interference filter.

16. Apparatus according to any of the preceding claims **characterized in that** the optical units (2, 4) each include a receiving optics (40, 40') for forming an image of an elongated, narrow marking (10, 10').

17. Apparatus according to any of the preceding claims **characterized in that** the optical units (2, 4) each include an aperture (38, 38') for improving a field of depth.

18. Apparatus according to claim 17 wherein the aperture (38, 38') is constructed of a metallic material for increasing an electromagnetic tolerance of the optical units (2, 4).

19. Apparatus according to claim 18 wherein the image-capturing unit (8, 8') is arranged at a distance of about 0.5-2 mm behind the aperture (38, 38').

## Revendications

1. Dispositif pour sécuriser une zone dangereuse, notamment d'une machine à fonctionnement automatisé, comportant un système optique pour surveiller un champ protégé (6, 6'), lequel système est constitué d'au moins deux unités optiques (2, 4) situées l'une en face de l'autre formant entre elles le champ protégé (6, 6'), lesquelles comportent chacune au moins une unité de prise de vues (8, 8'), qui sont reliées à une unité d'évaluation et de commutation (22) destinée à arrêter la machine en cas de transgression du champ protégé (6, 6'), l'unité de prise de vues (8, 8') détectant au moins un marquage (10', 10) situé du côté opposé du champ protégé (6, 6'), et l'unité d'évaluation et de commutation (22) comportant une unité de comparaison (12), qui compare l'image prise avec une image de référence, chaque unité optique (2, 4) comportant au moins un dispositif d'éclairage (28, 28') pour éclairer le marquage (10', 10) situé en face, et la première et la deuxième unité optique (2, 4) étant agencées de façon identique, et étant disposées à l'opposé, inversement du côté longitudinal, en étant orientées l'une vers l'autre et espacées entre elles, **caractérisé en ce que** l'unité de prise de vues (8, 8'), le marquage (10', 10) de l'unité optique (4, 2) respectivement opposée et le dispositif d'éclairage (28, 28') sont logés dans un boîtier (14, 14') commun et orientés vers le boîtier (14, 14'), l'unité de prise de vues (8, 8') de la première ou de la deuxième unité optique (2, 4) pouvant être éclairée par le dispositif d'éclairage (28', 28) de la deuxième ou de la première unité optique (4, 2) au-delà et/ou au-dessous d'une sensibilité de prise de vue de l'unité de prise de vues (8, 8'), et **en ce que** le dispositif d'éclairage (28, 28') de la première ou de la deuxième unité optique (2, 4) est disposé de façon à pouvoir être vu par l'unité de prise de vues (8', 8) de la deuxième ou de la première unité optique (4, 2).

2. Dispositif selon l'une des revendications précédentes, **caractérisé en ce que** des moyens sont prévus pour l'apprentissage du marquage (10, 10').

3. Dispositif selon l'une des revendications précédentes, **caractérisé en ce que** des moyens (18, 18') sont prévus pour la modification d'au moins un paramètre de fonctionnement du dispositif d'éclairage (28, 28').

4. Dispositif selon la revendication 3, **caractérisé en ce que** les moyens (18, 18') pour la modification du paramètre de fonctionnement du dispositif d'éclairage (28, 28') peuvent être activés de façon cyclique.

5. Dispositif selon la revendication 3 ou 4,
**caractérisé en ce que** le paramètre de fonctionnement du dispositif d'éclairage (28, 28') est une intensité lumineuse et/ou une durée d'impulsion lumineuse et/ou un intervalle d'impulsion lumineuse et/ou une longueur d'onde lumineuse.

6. Dispositif selon l'une des revendications précédentes, **caractérisé en ce que** l'unité d'évaluation et de commutation (22) est logée dans un autre boîtier (16).

7. Dispositif selon l'une des revendications précédentes, **caractérisé en ce que** les unités optiques (2, 4) sont reliées à l'unité d'évaluation et de commutation (22) par l'intermédiaire de canaux d'informations (26, 26').

8. Dispositif selon la revendication 7, **caractérisé en ce que** les canaux d'informations (26, 26') sont réalisés sous la forme de lignes de transmission d'informations, de système de bus ou de système de transmission sans fil.

9. Dispositif selon l'une des revendications précédentes, **caractérisé en ce que** le marquage (10, 10') s'étend sur la totalité d'une face du boîtier (14, 14').

10. Dispositif selon l'une des revendications précédentes, **caractérisé en ce que** d'autres marquages (10, 10') peuvent être apposés sur le boîtier (14, 14') en tant que modules.

11. Dispositif selon l'une des revendications précédentes, **caractérisé en ce que**, pour l'adaptation du marquage (10, 10'), le boîtier (14, 14') est réalisé de manière à pouvoir être mis à longueur.

12. Dispositif selon l'une des revendications précédentes, **caractérisé en ce que** le marquage (10, 10') comporte au moins deux différentes zones, notamment des champs (35, 34) de nuance claire ou foncée.

13. Dispositif selon la revendication 12, **caractérisé en ce que** des ouvertures (30, 32) pour l'unité de prise de vues (8, 8') et le dispositif d'éclairage (28, 28') sont pratiquées dans des champs de nuance foncée (34) du marquage (10, 10').

14. Dispositif selon l'une des revendications précédentes, **caractérisé en ce que** les unités de prise de vues (8, 8') de différentes unités optiques (2, 4) ont les mêmes dimensions qu'une surface de prise de vue pour des reproductions de différentes tailles et des reproductions différemment positionnées du marquage (10, 10') sur la surface de prise de vue.

15. Dispositif selon l'une des revendications précédentes, **caractérisé en ce que** chacune des unités optiques (2, 4) comporte un filtre d'interférence.

16. Dispositif selon l'une des revendications précédentes, **caractérisé en ce que** chacune des unités optiques (2, 4) comporte une optique de réception (40, 40') pour la reproduction d'un étroit marquage oblong (10', 10).

17. Dispositif selon l'une des revendications précédentes, **caractérisé en ce que** chacune des unités optiques (2, 4) comporte un diaphragme (38, 38') pour l'amélioration d'une profondeur de champ.

18. Dispositif selon la revendication 17, **caractérisé en ce que**, pour augmenter une compatibilité électromagnétique des unités optiques (2, 4), le diaphragme (38, 38') est réalisé en matériau métallique.

19. Dispositif selon les revendications 1 et 18,
**caractérisé en ce que** l'unité de prise de vues (8, 8') est disposée à un écartement de 0,5 à 2 mm derrière le diaphragme (38, 38').
